# FASCICULE DE BREVET EUROPEEN

(11) **EP 2 641 850 B1**
(45) Date de publication et mention de la délivrance du brevet: **12.02.2020**
(21) Numéro de dépôt: 13290067.1
(22) Date de dépôt: 18.03.2013
(51) Int. Cl.: B65D 90/08, F16B 5/00, F16B 5/06

(54) **Procédé et dispositif pour la liaison rigide de deux éléments minces**
Verfahren und Vorrichtung für die starre Verbindung von zwei Dünnzellenelementen
Method and device for rigid connection of two thin elements

(30) Priorité: 20.03.2012 FR 1200835
(43) Date de publication de la demande: 25.09.2013
(73) Titulaire: MBDA France, 92350 Le Plessis-Robinson (FR)
(72) Inventeur: Durand, François, 78114 Magny-Les-Hameaux (FR); Bertrand, Xavier, 78180 Montigny-Le-Bretonneux (FR); Sistac-Meler, Javier, 78370 Plaisir (FR); Leclercq, Benoît, 78180 Montigny-Le-Bretonneux (FR)
(74) Mandataire: Gevers & Orès

(56) Documents cités:
- CH-A5- 597 451
- DE-A1-102006 023 840

## Description

La présente invention concerne un procédé et un dispositif pour la liaison rigide, par leurs bords en regard, de deux éléments minces, par exemple plans ou cylindriques.

Quoique non exclusivement, la présente invention est tout particulièrement appropriée à être mise en œuvre avec des éléments minces, dont au moins l'un d'entre eux est réalisé en une matière composite fibres-résine.

Pour assembler rigidement, par leurs bords, des éléments minces en matière composite fibres-résine, il est connu de munir lesdits bords de brides par collage ou bien par usinage. Dans le premier cas, la colle constitue un point de faiblesse de l'assemblage, alors que, dans le second cas, l'usinage entraîne le sectionnement de fibres de la matière composite et donc également un affaiblissement local dudit assemblage.

La présente invention a pour objet de remédier à ces inconvénients.

A cette fin, selon l'invention, le procédé pour la liaison rigide, par leurs bords en regard, de deux éléments minces, par exemple plans ou cylindriques, au moins l'un desdits éléments étant réalisé en une matière composite fibres-résine, est remarquable en ce que :
- on prépare une bride présentant une cavité à section au moins approximativement trapézoïdale évasée ;
- on prépare une contre-bride présentant une saillie à section au moins approximativement trapézoïdale convergente, de forme complémentaire de celle de la cavité de ladite bride ;
- on conforme au moins en partie les bords desdits éléments minces à la forme de la saillie de ladite contre-bride ;
- on rapproche l'une de l'autre ladite bride et ladite contre-bride en interposant lesdits bords conformés entre ladite cavité de la bride et ladite saillie de la contre-bride ; et
- on serre ladite bride et ladite contre-bride l'une en direction de l'autre pour qu'elles pressent entre eux lesdits bords conformés desdits éléments, la profondeur de la cavité de la bride et l'épaisseur des bords des éléments étant choisies pour que, en fin de serrage de ladite bride et de ladite contre-bride, il existe un vide entre le fond de ladite cavité de la bride et lesdits bords des éléments.

Ainsi, grâce à la présente invention on peut assembler rigidement l'un à l'autre deux éléments minces de matière composite fibres-résine, uniquement par serrage de leurs bords en regard précédemment conformés, sans collage ni usinage affaiblissant. De plus, on est sûr que le serrage est optimal, sans être limité par un éventuel contact de butée entre les bords des éléments et le fond de la cavité de la bride.

On remarquera que le document antérieur DE 10 2006 023840 A1 décrit l'assemblage de deux éléments minces métalliques par sertissage sous pression.

La présente invention concerne de plus un dispositif pour la liaison rigide par leurs bords en regard, de deux éléments minces, plans ou cylindriques, remarquable en ce qu'il comporte ;
- une bride présentant une cavité à section au moins approximativement trapézoïdale évasée
- une contre-bride présentant une saillie à section au moins approximativement trapézoïdale convergente, de forme complémentaire de celle de la cavité de ladite bride ; et
- des moyens de serrage pour serrer ladite bride et ladite contre-bride l'une en direction de l'autre, pour qu'elles puissent presser entre eux les bords desdits éléments conformés au moins en partie à la forme de la saillie de ladite contre-bride.

De préférence, la saillie de ladite contre-bride comporte une face d'appui du côté de la petite base de la section au moins approximativement trapézoïdale convergente. Ainsi, au moins l'un desdits bords conformés peut s'appuyer sur ladite face d'appui pour rigidifier la liaison et empêcher tout basculement de l'un des éléments par rapport à l'autre.

Dans un mode de réalisation de la présente invention, ladite contre-bride fait partie intégrante du bord de l'un desdits éléments.

Avantageusement, lesdits moyens de serrage sont des vis qui, soit prennent appui sur ladite contre-bride et se vissent dans ladite bride, soit prennent appui sur ladite bride et se vissent dans ladite contre-bride.

Lesdites vis peuvent comporter des têtes logées dans des évidements qui sont pratiqués dans ladite contre-bride ou ladite bride, respectivement, et sur lesquels lesdites têtes prennent appui.

Lorsque ladite contre-bride fait partie intégrante du bord de l'un desdits éléments, elle peut comporter un logement partiel pour ladite bride.

Une mise en oeuvre particulièrement avantageuse de la présente invention est l'assemblage bout à bout de deux tronçons cylindriques d'un conteneur, lesdits tronçons de conteneur pouvant être réalisés en une matière composite fibres/résine.

Les figures du dessin annexé feront bien comprendre comment l'invention peut être réalisée. Sur ces figures, des références identiques désignent des éléments semblables.

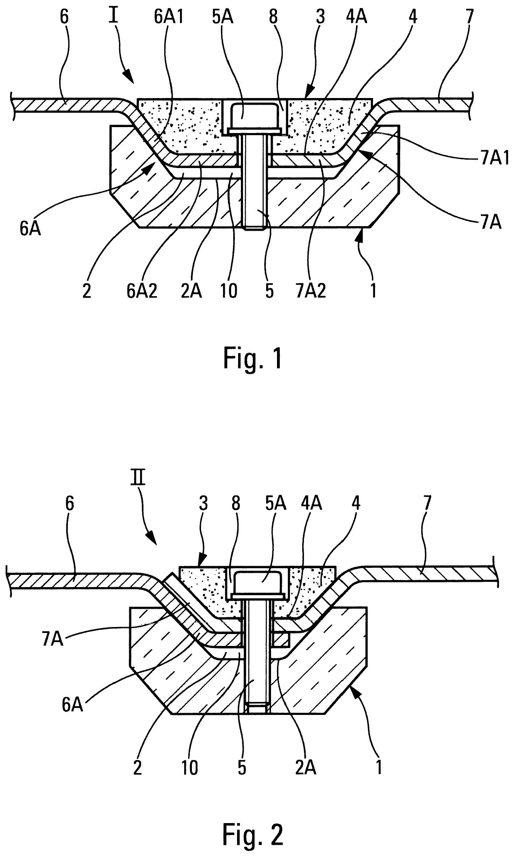

Les figures 1 à 4 illustrent respectivement, en coupe schématique, quatre modes de réalisation de la présente invention. Les modes de réalisation III à IV ne sont pas couverts par les revendications.

Chacun de ces quatre modes de réalisation I à IV comporte :
- une bride 1 présentant une cavité 2 à section trapézoïdale évasée avec un fond 2A.
- une contre-bride 3 présentant une saillie 4 à section trapézoïdale convergente, de forme complémentaire à celle de la cavité 2 de la bride 1, ladite saillie 4 ayant une petite base 4A, et
- des moyens de serrage, par exemple des vis 5, pour serrer ladite bride 1 et ladite contre-bride 3 l'une en direction de l'autre.

De plus, chacun des quatre modes de réalisation I à IV est destiné à assembler rigidement deux éléments minces 6 et 7, par exemple plans ou cylindriques, par leurs bords conformés en regard, 6A et 7A. Dans un mode de mise en oeuvre particulier de l'invention, les éléments 6 et 7 sont des tronçons cylindriques d'un conteneur, réalisés par exemple en une matière composite fibres/résine.

Dans les modes de réalisation I, Il et III, la tête 5A des vis 5 est logée dans un évidement 8 de la contre-bride 3 et lesdites vis 5 prennent appui sur ladite contre-bride 3 et se vissent dans la bride 1. En revanche, dans le mode de réalisation IV, la tête 5A des vis 5 est logée dans un évidement 9 de la bride 1 et lesdites vis 5 prennent appui sur ladite bride 1 et se vissent dans la contre-bride 3.

Les bords 6A et 7A du mode de réalisation I de la figure 1 sont conformés de façon identique, chacun d'eux comportant une partie oblique 6A1, 7A1, de même forme que les bords obliques de la saillie 4, et une partie 6A2, 7A2 correspondant à la base 4A de ladite saillie 4. Ainsi, quand les bords 6A et 7A en regard sont disposés entre la bride 1 et la contre-bride 3, leurs parties obliques 6A1, 7A1 peuvent être au contact des parties obliques de ladite bride 1 et de ladite contre-bride 3, alors que leurs parties 6A2, 7A2 peuvent être au contact de la base 4A. Après mise en place et vissage des vis 5, les bords 6A et 7A sont rigidement assemblés l'un à l'autre par serrage entre la bride 1 et la contre-bride 3. Afin que ce serrage puisse être optimal, la profondeur de la cavité 2 de la bride 1 et l'épaisseur des bords 6 et 7 sont telles que, en fin de serrage, il existe un vide 10 entre le fond 2A de la cavité 2 de la bride 1 et les parties 6A2, 7A2 des bords 6A et 7A. C'est cette situation de serrage optimal qui est représentée sur la figure 1.

Dans la variante de réalisation II de la figure 2, le bord 7A de l'élément 7 est conformé pour épouser la totalité de la forme de la saillie 4 de la contre-bride 3 et le bord 6A de l'élément 6 présente une forme semblable à celle représentée sur la figure 1, mais il s'applique sur ledit bord 7A, au lieu de s'appliquer directement sur la contre-bride 3. Là encore, en fin de serrage à l'aide des vis 5 (situation représentée sur la figure 2), il existe un vide 10 entre le fond 2A de la cavité 2 et les bords 6A.

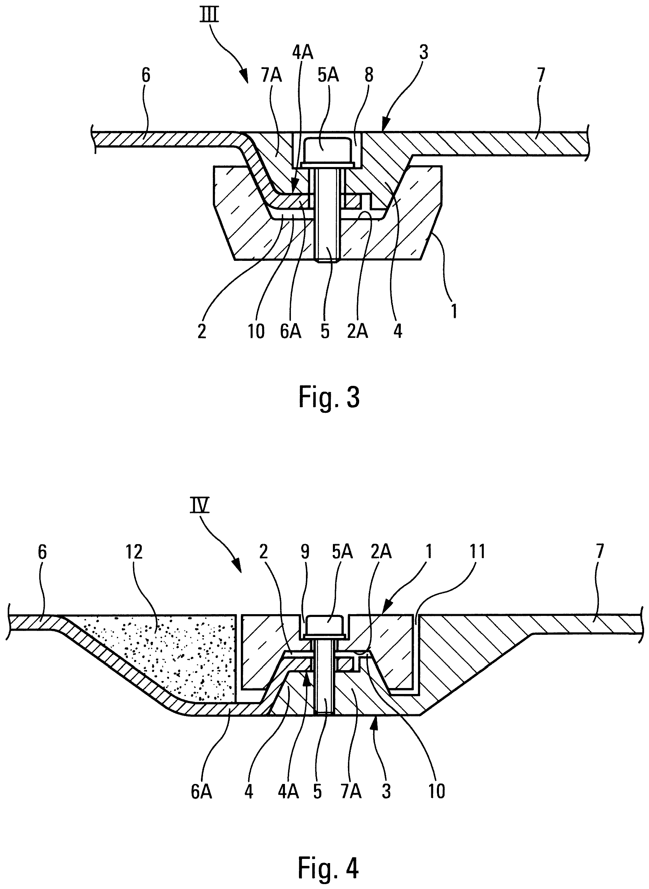

Le mode de réalisation III de la figure 3 est semblable au mode de réalisation I de la figure 1, à ceci près que ladite contre-bride 3 fait partie intégrante du bord 7A de l'élément 7. En conséquence, dans ce mode de réalisation la base 4A fait partie de l'élément 7 et seul le bord 6A de l'élément 6 s'y applique .

De même, dans le mode de réalisation IV de la figure 4, la contre-bride 3 fait partie intégrante du bord 7A de l'élément 7. De plus, la bride 1 est logée dans un évidement partiel 11 dudit bord 7A. Il en résulte un épaississement de celui-ci et la formation d'un creux du côté du bord 6A de l'élément 6, creux qui peut être bouché par un remplissage 12.

Bien entendu, bien que cela n'ait pas été représenté sur les dessins, des joints d'étanchéité (de toutes natures) peuvent être disposés, là où cela est nécessaire, entre la bride 5, la contre-bride 3, les vis 5 et les bords conformés 6A et 7A.

## Revendications

1. Procédé pour la liaison rigide, par leurs bords en regard, de deux éléments minces (6, 7), dont au moins l'un d'entre eux est réalisé en une matière composite fibres-résine,
**caractérisé en ce que** :
- on prépare une bride (1) présentant une cavité (2) à section au moins approximativement trapézoïdale évasée ;
- on prépare une contre-bride (3) présentant une saillie (4) à section au moins approximativement trapézoïdale convergente, de forme complémentaire de celle de la cavité (2) de ladite bride (1) ;
- on conforme au moins en partie les bords (6A, 7A) desdits éléments minces (6, 7) à la forme de la saillie (4) de ladite contre-bride (3) ;
- on rapproche l'une de l'autre ladite bride (1) et ladite contre-bride (3) en interposant lesdits bords conformés (6A, 7A) entre ladite cavité de la bride et ladite saillie de la contre-bride ; et
- on serre ladite bride (1) et ladite contre-bride (3) l'une en direction de l'autre pour qu'elles pressent entre elles lesdits bords conformés (6A, 7A) desdits éléments (6, 7), la profondeur de ladite cavité (2) de la bride (1) et l'épaisseur des bords (6A, 7A) desdits éléments (6, 7) étant choisies pour que, en fin de serrage de ladite bride (1) et de ladite contre-bride (3), il existe un vide (10) entre le fond (2A) de ladite cavité et lesdits bords.

2. Dispositif pour la mise en œuvre du procédé de la revendication 1, **caractérisé en ce qu'**il comporte :
- une bride (1) présentant une cavité (2) à section au moins approximativement trapézoïdale évasée ;
- une contre-bride (3) présentant une saillie (4) à section au moins approximativement trapézoïdale convergente, de forme complémentaire de celle de la cavité (2) de ladite bride (1) ; et
- des moyens de serrage (5) pour serrer ladite bride (1) et ladite contre-bride (3) l'une en direction de l'autre, pour qu'elles puissent presser entre eux les bords (6A, 7A) desdits éléments conformés au moins en partie à la forme de la saillie (4) de ladite contre-bride (3),
la cavité (2) de la bride (1) présentant une profondeur configurée, en coopération avec l'épaisseur des bords (6A, 7A) desdits éléments (6, 7), pour qu'il existe un vide (10) entre le fond (2A) de la cavité (2) de la bride et lesdits bords, en fin de serrage de ladite bride (1) et de ladite contre-bride (3).

3. Dispositif selon la revendication 2,
**caractérisé en ce que** la saillie (4) de ladite contre-bride (3) comporte une face d'appui (4A) du côté de la petite base de la section au moins approximativement trapézoïdale convergente.

4. Dispositif selon l'une des revendications 2 ou 3,
caractérisé en ce ladite contre-bride (3) fait partie intégrante du bord (7A) de l'un desdits éléments.

5. Dispositif selon l'une des revendications 2 à 4,
**caractérisé en ce que** lesdits moyens de serrage (5) sont des vis prenant appui sur ladite contre-bride (3) et se vissant dans ladite bride (1).

6. Dispositif selon l'une des revendications 2 à 4,
**caractérisé en ce que** lesdits moyens de serrage (5) sont des vis prenant appui sur ladite bride (1) et se vissant dans ladite contre-bride (3).

7. Dispositif selon l'une des revendications 5 ou 6,
**caractérisé en ce que** lesdites vis (5) comportent des têtes logées (5A) dans des évidements (8, 9) sur lesquels elles prennent appui.

8. Dispositif selon la revendication 4,
**caractérisé en ce que** ladite contre-bride (3) faisant partie intégrante du bord (7A) de l'un desdits éléments comporte un logement partiel (11) pour ladite bride (1).

9. Conteneur comportant au moins deux tronçons cylindriques assemblés bout à bout, au moins l'un desdits tronçons étant réalisé en une matière composite fibres-résine,
**caractérisé en ce que** lesdits tronçons sont assemblés au moyen du dispositif de liaison spécifié sous l'une des revendications 2 à 8.

## Patentansprüche

1. Verfahren für die starre Verbindung, durch ihre gegenüberliegenden Ränder, von zwei dünnen Elementen (6, 7), von welchen mindestens eines aus einem Faser-Harz-Verbundmaterial hergestellt ist,
**dadurch gekennzeichnet, dass**:
- ein Flansch (1) vorbereitet wird, der einen Hohlraum (2) mit mindestens in etwa trapezförmigem aufgeweitetem Querschnitt aufweist;
- ein Gegenflansch (3) vorbereitet wird, der einen Vorsprung (4) mit mindestens in etwa trapezförmigem konvergierendem Querschnitt mit komplementärer Form zu dem des Hohlraums (2) des Flanschs (1) aufweist;
- mindestens ein Teil der Ränder (6A, 7A) der dünnen Elemente (6, 7) mit der Form des Vorsprungs (4) des Gegenflanschs (3) formangeglichen wird;
- der Flansch (1) und der Gegenflansch (3) einander angenähert werden, indem die formangeglichenen Ränder (6A, 7A) zwischen dem Hohlraum des Flanschs und dem Vorsprung des Gegenflanschs eingefügt werden; und
- der Flansch (1) und der Gegenflansch (3) einer in Richtung des anderen angedrückt werden, damit sie zwischeneinander die formangeglichenen Ränder (6A, 7A) der Elemente (6, 7) pressen, wobei die Tiefe des Hohlraums (2) des Flanschs (1) und die Stärke der Ränder (6A, 7A) der Elemente (6, 7) ausgewählt sind, damit am Ende des Andrückens des Flanschs (1) und des Gegenflanschs (3) ein Leerraum (10) zwischen dem Boden (2A) des Hohlraums und den Rändern besteht.

2. Vorrichtung zum Umsetzen des Verfahrens des Anspruchs 1, **dadurch gekennzeichnet, dass** sie Folgendes umfasst:
- einen Flansch (1), der einen Hohlraum (2) mit mindestens etwa trapezförmigem aufgeweitetem Querschnitt aufweist;
- einen Gegenflansch (3), der einen Vorsprung (4) mit mindestens in etwa trapezförmigem konvergierendem Querschnitt mit Form komplementär zu der des Hohlraums (2) des Flanschs (1) aufweist; und
- Andrückmittel (5), um den Flansch (1) und den Gegenflansch (3) einen in Richtung des anderen anzudrücken, damit sie zwischeneinander die Ränder (6A, 7A) der Elemente, die mindestens zum Teil an die Form des Vorsprungs (4) des Gegenflanschs (3) formangeglichen sind, pressen können,
wobei der Hohlraum (2) des Flanschs (1) eine Tiefe aufweist, die in Zusammenwirkung mit der Stärke der Ränder (6A, 7A) der Elemente (6, 7) konfiguriert ist, damit ein Leerraum (10) zwischen dem Boden (2A) des Hohlraums (2) des Flanschs und den Rändern am Ende des Andrückens des Flanschs (1) und des Gegenflanschs (3) existiert.

3. Vorrichtung nach Anspruch 2,
**dadurch gekennzeichnet, dass** der Vorsprung (4) des Gegenflanschs (3) eine Auflagefläche (4A) der Seite der kleinen Basis mit dem mindestens in etwa trapezförmigem konvergierendem Querschnitt umfasst.

4. Vorrichtung nach einem der Ansprüche 2 oder 3,
**dadurch gekennzeichnet, dass** der Gegenflansch (3) fester Bestandteil des Rands (7A) eines der Elemente ist.

5. Vorrichtung nach einem der Ansprüche 2 bis 4,
**dadurch gekennzeichnet, dass** die Andrückmittel (5) Schrauben sind, die auf dem Gegenflansch (3) aufliegen und in den Flansch (1) geschraubt sind.

6. Vorrichtung nach einem der Ansprüche 2 bis 4,
**dadurch gekennzeichnet, dass** die Andrückmittel (5) Schrauben sind, die auf dem Flansch (1) aufliegen und in den Gegenflansch (3) geschraubt sind.

7. Vorrichtung nach einem der Ansprüche 5 oder 6,
**dadurch gekennzeichnet, dass** die Schrauben (5) Köpfe (5A) umfassen, die in Aussparungen (8, 9), auf welchen sie aufliegen, aufgenommen sind.

8. Vorrichtung nach Anspruch 4,
**dadurch gekennzeichnet, dass** der Gegenflansch (3), der fester Bestandteil des Rands (7A) eines der Elemente ist, eine teilweise Aufnahme (11) für den Flansch (1) umfasst.

9. Behälter, der mindestens zwei zylindrische Abschnitte umfasst, die Ende an Ende zusammengefügt sind, wobei mindestens einer der Abschnitte aus einem Faser-Harz-Verbundmaterial hergestellt ist,
**dadurch gekennzeichnet, dass** die Abschnitte mittels der Verbindungsvorrichtung, die in einem der Ansprüche 2 bis 8 spezifiziert ist, zusammengefügt sind.

## Claims

1. Method for the rigid connection, via the opposing edges thereof, of two thin elements (6, 7), of which at least one is produced from a composite fibre/resin material, **characterised in that**:
- a flange (1) is prepared which has a cavity (2) having a flared cross-section which is at least approximately trapezoidal;
- a counter-flange (3) is prepared which has a protrusion (4) which has a convergent cross-section which is at least approximately trapezoidal and which has a shape which complements that of the cavity (2) of the flange (1);
- the edges (6A, 7A) of the thin elements (6, 7) are at least partially formed to the shape of the protrusion (4) of the counter-flange (3);
- the flange (1) and the counter-flange (3) are moved closer to each other with the formed edges (6A, 7A) being interposed between the cavity of the flange and the protrusion of the counter-flange; and
- the flange (1) and the counter-flange (3) are clamped in the direction of each other so that they press between them the formed edges (6A, 7A) of the elements (6, 7), the depth of the cavity (2) of the flange (1) and the thickness of the edges (6A, 7A) of the elements (6, 7) being selected so that, at the end of clamping of the flange (1) and the counter-flange (3), there is a gap (10) between the base (2A) of the cavity and the edges.

2. Device for implementing the method of claim 1,
**characterised in that** it comprises:
- a flange (1) which has a cavity (2) having a flared cross-section which is at least approximately trapezoidal;
- a counter-flange (3) which has a protrusion (4) which has a convergent cross-section which is at least approximately trapezoidal and which has a shape which complements that of the cavity (2) of the flange (1); and
- clamping means (5) for clamping the flange (1) and the counter-flange (3) in the direction of each other so that they can press, between them the edges (6A, 7A) of the elements which are at least partially formed to the shape of the protrusion (4) of the counter-flange (3),
the cavity (2) of the flange (1) having a depth formed, in cooperation with the thickness of the edges (6A, 7A) of said elements (6, 7), such that there is a gap (10) between the base (2A) of the cavity (2) of the flange and said edges, at the end of the clamping operation of said flange (1) and said counter-flange (3).

3. Device according to claim 2,
**characterised in that** the protrusion (4) of the counter-flange (3) comprises an abutment face (4A) at the side of the small base of the convergent, at least approximately trapezoidal cross-section.

4. Device according to either claim 2 or claim 3,
**characterised in that** the counter-flange (3) is an integral portion of the edge (7A) of one of the elements.

5. Device according to any of claims 2 to 4,
**characterised in that** the clamping means (5) are screws which are supported on the counter-flange (3) and screwed into the flange (1).

6. Device according to any of claims 2 to 4,
**characterised in that** the clamping means (5) are screws which are supported on the flange (1) and screwed into the counter-flange (3).

7. Device according to either claim 5 or claim 6,
**characterised in that** the screws (5) comprise heads (5A) which are accommodated in recesses (8, 9) on which they are supported.

8. Device according to claim 4,
**characterised in that** the counter-flange (3) which is an integral portion of the edge (7A) of one of the elements comprises a partial housing (11) for the flange (1).

9. Container comprising at least two cylindrical portions which are assembled end-to-end, at least one of said portions being produced from a composite fibre/resin material,
**characterised in that** the portions are assembled using the connection device which is specified in any of claims 2 to 8.
